Europäisches Patentamt

European Patent Office

Office européen des brevets

(19)

(11) **EP 0 904 535 B1**

(12) **FASCICULE DE BREVET EUROPEEN**

(45) Date de publication et mention
de la délivrance du brevet:
**07.08.2002 Bulletin 2002/32**

(21) Numéro de dépôt: **97928320.7**

(22) Date de dépôt: **10.06.1997**

(51) Int Cl.$^7$: **G01N 29/14**, G01S 3/808

(86) Numéro de dépôt international:
**PCT/FR97/01026**

(87) Numéro de publication internationale:
**WO 97/47965 (18.12.1997 Gazette 1997/54)**

(54) **PROCEDE ET DISPOSITIF DE DETECTION ET DE LOCALISATION DE SOURCE SONORE REFLECHISSANTE**

VERFAHREN UND VORRICHTUNG ZUR ERFASSUNG UND LOKALISIERUNG EINER REFLEKTIERENDEN SCHALLQUELLE

METHOD AND DEVICE FOR DETECTING AND LOCATING A REVERBERATING SOURCE OF SOUND

(84) Etats contractants désignés:
**DE GB IT**

(30) Priorité: **13.06.1996 FR 9607359**

(43) Date de publication de la demande:
**31.03.1999 Bulletin 1999/13**

(73) Titulaires:
• **Fink, Mathias**
**92190 Meudon (FR)**
• **Lewiner, Jacques**
**92210 Saint-Cloud (FR)**

(72) Inventeurs:
• **Fink, Mathias**
**92190 Meudon (FR)**
• **Lewiner, Jacques**
**92210 Saint-Cloud (FR)**

(74) Mandataire: **Loisel, Bertrand et al**
**Cabinet Plasseraud,**
**84, rue d'Amsterdam**
**75440 Paris Cédex 09 (FR)**

(56) Documents cités:
**EP-A- 0 383 650        FR-A- 2 262 303**
**US-A- 4 592 034**

EP 0 904 535 B1

## Description

La présente invention a pour objet un procédé et un dispositif permettant de détecter et/ou de localiser une source sonore.

L'invention présente de nombreuses applications parmi lesquelles on peut citer le domaine du contrôle non destructif d'objets solides par les méthodes dites d'émission acoustique, dont on peut trouver des illustrations dans l'ouvrage "Essais non destructifs. L'émission acoustique - Mise en oeuvre et applications" par James Roget, AFNOR-CETIM, 1988.

Dans ces méthodes d'émission acoustique, on soumet l'objet étudié à des contraintes extérieures, qui peuvent être mécaniques ou thermiques, et on utilise des capteurs autour de l'objet pour détecter d'éventuels craquements ou microbruits générés par ces contraintes et révélateurs de défauts structurels de l'objet. Une difficulté de ces méthodes est que le niveau du signal représentatif d'un défaut peut être très faible et peu distinct du bruit de fond qui l'accompagne.

L'invention s'applique plus généralement à la détection de sources sonores pouvant être de faible niveau, absolu ou relatif, dans le signal recueilli par des capteurs acoustiques. Le milieu de propagation acoustique ne doit pas être compris comme étant limité aux solides. Il peut également être fluide (liquide ou gazeux) ou comporter des interfaces.

Pour pallier les limitations des procédés passifs de localisation de source sonore en présence d'un faible rapport signal-sur-bruit, il est connu de les combiner à des techniques de corrélation et/ou de triangulation pour rechercher les sources et les identifier.

Toutefois ces techniques présentent également des limitations. D'une part, si le milieu de propagation est très perturbateur (réfraction, réflexions multiples...) pour les ondes acoustiques, les différents capteurs du réseau reçoivent des signaux acoustiques qui ont perdu toute corrélation, ce qui rend quasiment impossible la détection et la localisation précise de la source sonore. D'autre part, dans un environnement très bruité (comme par exemple un fluide en écoulement ou le milieu marin), le rapport signal sur bruit peut être tellement faible que la détection et la localisation de la source sonore restent impossibles même avec des calculs de corrélation sophistiqués.

On connaît par ailleurs (EP-A-0 383 650 ou US-A-5 092 336) un procédé de détection et de localisation de cible réfléchissante, suivant lequel on illumine le milieu à partir d'au moins un transducteur émettant un faisceau dit d'illumination, on recueille les signaux réfléchis par le milieu à l'aide de plusieurs transducteurs appartenant à un réseau et on les mémorise ; on sélectionne les échos provenant d'une zone déterminée du milieu par fenêtrage ; on retourne temporellement les signaux et on les ré-émet ; et on répète les opérations précédentes. Dans ce procédé, la cible éventuellement détectée est généralement l'objet le plus réfléchissant de la zone considérée (calculs dans le cas d'applications en lithotripsie, défauts structurels dans le cas du contrôle non destructif, etc...). Si plusieurs objets réfléchissants contribuent au signal mesuré, une ou plusieurs itérations du processus permettent une focalisation sélective sur la cible.

Ce procédé améliore déjà considérablement les capacités de détection et de localisation, particulièrement dans des milieux présentant des variations spatiales des propriétés acoustiques telles que la célérité des ondes (voir "Time Reversal of Ultrasonic Fields - Part I : Basic Principles", par M. Fink, IEEE Trans. on UFFC, vol 39, No. 5, septembre 1992, pages 555-566). Toutefois, dans certaines conditions, le faisceau d'illumination peut ne pas produire au niveau de la cible une illumination suffisante pour produire une réflexion assez grande pour être détectable par le réseau des capteurs. Du fait de cette limitation, on prévoit en général que le faisceau d'illumination soit une brève impulsion de pression, permettant une détection de front d'onde ou d'écho d'impulsion dans le signal recueilli (voir EP-A-0 591 061 ou US-A-5 428 999). Mais cette disposition peut être insuffisante, notamment lorsque le rapport signal-sur-bruit est très faible, ou en présence de fortes aberrations entre les transducteurs et la cible.

Par ailleurs, il se peut dans certains cas que la cible intéressante ne soit pas l'objet le plus réfléchissant de la zone explorée. Dans de tels cas, les procédés connus à retournement temporel peuvent être mis en échec. Par exemple, en contrôle non destructif, la contribution d'un défaut structurel aux signaux d'écho peut être complètement noyée dans celles des surfaces ou interfaces de la pièce examinée, ce problème nécessitant des dispositions spéciales telles que celles décrites dans EP-A-0 541 434 ou dans US-A-5 431 053.

Lorsque la cible intéressante est une source sonore, celle-ci n'est pas nécessairement l'objet le plus réfléchissant de son environnement, ce qui limite l'efficacité des procédés connus à retournement temporel pour pallier les déficiences des procédés d'écoute passive. Par exemple, si on recherche au moyen d'hydrophones où se trouve une fuite de gaz sur un gazoduc sous-marin, le tronçon de gazoduc comportant la fuite ne sera a priori pas plus réfléchissant que les autres tronçons.

La présente invention vise notamment à fournir un procédé de détection et/ou de localisation de source sonore répondant mieux que ceux antérieurement connus aux exigences de la pratique, notamment en ce qu'il permet une détection de source dans un milieu bruité et/ou présentant des réflexions et des réfractions multiples mettant en échec les procédés antérieurs.

L'invention propose ainsi un procédé de détection et/ou de localisation d'une source sonore, comprenant une étape initiale passive dans laquelle on capte des signaux acoustiques reçus par des transducteurs de réception situés aux noeuds d'un premier réseau et on mémorise des signaux électriques produits par les transducteurs de réception du premier réseau en réponse auxdits signaux acoustiques. Le procédé comprend ensuite les étapes suivantes :

(a) on retourne temporellement et on amplifie au moins une fenêtre temporelle de chaque signal électrique mémorisé à l'étape initiale passive pour produire des signaux d'excitation ;

(b) on applique les signaux d'excitation à des transducteurs d'émission respectifs situés aux noeuds d'un second réseau correspondant spatialement au premier réseau ;

(c) on capte des signaux d'écho acoustique reçus par des transducteurs de réception situés aux noeuds d'un troisième réseau et on mémorise des signaux électriques produits par les transducteurs de réception du troisième réseau en réponse auxdits signaux d'écho acoustique ; et

(d) on utilise les signaux électriques mémorisés à l'étape (c) pour détecter la présence éventuelle d'une source sonore réfléchissante.

Dans un mode de réalisation typique, les "premier", "second" et "troisième" réseaux sont confondus et constitués de transducteurs fonctionnant en réception et en émission.

L'invention utilise le fait que les signaux sonores renvoyés au cours de l'étape (b) sont soumis aux mêmes conditions de propagation que les signaux sonores reçus au cours de l'étape passive initiale, dans la mesure où la position relative de la source et du réseau de transducteurs ne s'est pas trop modifiée entre ces étapes et dans la mesure où les lobes d'émission sont proches des lobes de réception. Du fait de ce trajet inverse, l'énergie sonore restituée au cours de l'étape (b) se concentre sur toute source émettant un niveau sonore suffisant. Cette source doit être réfléchissante pour être détectable selon l'invention. Mais il n'est pas obligatoire qu'elle soit l'objet le plus réfléchissant de la zone explorée compte tenu de la focalisation déjà effectuée dès la première émission par le second réseau de transducteurs. Les aberrations sont largement compensées du fait du trajet inverse.

Toutes les méthodes connues de détection et de classification de sources réfléchissantes peuvent être utilisées pour exploiter les mesures faites à l'étape (c). Par exemple, dans un cas où la source sonore recherchée serait de type impulsionnel, on peut rechercher sur ces enregistrements la présence éventuelle d'un pic de signal sur plusieurs voies de réception. Si de tels pics de signal n'apparaissent pas de façon visible sur les enregistrements, il est possible de rechercher des corrélations entre les signaux de différentes voies.

De telles corrélations peuvent faire apparaître des sources non directement visibles. Tout autre procédé connu, du même genre, peut être utilisé.

Si, même dans ces conditions, une source reste noyée dans le bruit et reste donc indétectable, il est possible de gagner encore en sensibilité en prévoyant que l'étape (d) d'utilisation des signaux électriques mesurés à l'étape (c) comprenne elle-même une ou plusieurs itérations d'un processus semblable à la séquence des étapes (a) à (c), c'est-à-dire comportant les étapes suivantes :

(e) on retourne temporellement et on amplifie au moins une fenêtre temporelle de chaque signal électrique qui vient d'être mémorisé pour produire des signaux d'excitation ;

(f) on applique ces signaux d'excitation à des transducteurs d'émission situés aux noeuds d'un quatrième réseau correspondant spatialement au troisième réseau ; et

(g) on capte des signaux d'écho acoustique reçus par des transducteurs de réception situés aux noeuds d'un cinquième réseau et on mémorise des signaux électriques correspondants.

Les enregistrements ainsi obtenus après une ou plusieurs itérations peuvent alors être utilisés, comme indiqué précédemment, pour détecter la présence éventuelle d'une source sonore réfléchissante.

Typiquement, les "quatrième" et "cinquième" réseaux pourront être confondus avec le troisième.

Le fait de disposer des enregistrements qui correspondent à deux itérations successives permet une amélioration considérable des capacités de détection d'une source réfléchissante. A cette fin, lorsque les troisième et cinquième réseaux sont confondus, on utilise le perfectionnement suivant lequel, après avoir effectué les étapes (a) à (c) puis n itérations ($n \geq 1$) des étapes (e) à (g), on évalue, pour certains au moins des transducteurs de réception du troisième réseau, une fonction d'intercorrélation individuelle $C_i^n(t)$ entre le signal électrique mémorisé immédiatement avant la n-ième itération et le signal électrique mémorisé à la fin de la n-ième itération (étape (g)), et on exploite la distribution des fonctions d'intercorrélation individuelles ainsi évaluées.

Une méthode particulièrement avantageuse consiste à construire une fonction d'intercorrélation globale $C^n(t)$ par somme des $C_i^n(t)$ sur un certain nombre de voies :

$$C^n(t) = \sum_i C_i^n(t).$$

La présence d'une source sonore réfléchissante même faible donne dès lors naissance à un pic très important dans la fonction de corrélation $C^n(t)$.

Dans les notations ci-dessus, les indices inférieurs i font référence aux voies relatives chacune à l'un des transducteurs de réception du troisième réseau, et les indices supérieurs font référence aux rangs des itérations successives.

On peut considérer que les étapes (a) à (c) constituent une itération n = 0, bien que les signaux traités soient de nature différente (écoute passive et non mesure d'écho). Dans le cas où les premier, troisième et cinquième réseaux coïncident de même que les second et quatrième réseaux, on note $R_i^{n+1}(t)$ le signal électrique produit par le transducteur i à l'étape (c) ou (g) de l'itération $n \geq 0$, et $R_i^0(t)$ le signal électrique produit par le transducteur i à l'étape passive initiale.

Les traitements effectués à l'étape (a) (n=0) ou à l'étape (e) (n>0) peuvent alors être exprimés par :

$$E_i^n(t) = A_i^n \cdot S_i^n(T_i^n - t) \qquad (1)$$

le signal d'excitation $E_i^n(t)$ étant, à l'étape (b) ou (f) suivante, appliqué à un transducteur d'émission placé au même endroit que le transducteur de réception i. Dans l'expression (1) :

- le signal $S_i^n(t)$ désigne le signal $R_i^n(t)$ multiplié par une fonction de fenêtrage prédéterminée $W_i^n(t)$ ;
- $A_i^n$ désigne un gain d'amplification prédéterminé relatif à la voie i et à l'itération n (en général, les gains $A_i^n$ seront les mêmes pour toutes les voies i : $A_i^n = A^n$) ;
- $T_i^n$ désigne un retard nécessaire à la mise en oeuvre du retournement temporel pour des raisons de causalité (en général les retards $T_i^n$ seront les mêmes pour toutes les voies i : $T_i^n = T^n$ ).

L'importance du fenêtrage doit être soulignée. Une fonction de fenêtrage $W_i^n(t)$ est généralement définie comme une fonction de pondération nulle en dehors d'un intervalle ou fenêtre temporelle donnée. Les formes classiquement utilisées dans le domaine de l'acoustique peuvent être employées pour les $W_i^n(t)$ : fonctions rectangulaires, de Hamming etc... .

En choisissant les positions des fenêtres temporelles, il est possible de sonder différentes régions du milieu, soit à des distances différentes, soit dans des directions angulaires différentes relativement au(x) réseau(x) de transducteurs, en exploitant de manière connue en soi les lois de retard des phénomènes de propagation.

Il convient d'observer qu'à l'étape passive initiale, à l'étape (c) et/ou aux étapes (g), la mémorisation peut indifféremment porter sur les signaux $R_i^n(t)$ ou sur les signaux fenêtrés et pondérés $S_i^n(t) = R_i^n(t).W_i^n(t)$, ceci n'étant qu'un choix d'implémentation sans conséquence majeure sur le déroulement du procédé.

Le calcul des fonctions d'intercorrélation individuelles $C_i^n(t)$, lorsqu'il est mis en oeuvre, peut également tenir compte des fonctions de fenêtrage $W_i^n(t)$ :

$$C_i^n(t) = \int_{-\infty}^{+\infty} S_i^n(u) \cdot S_i^{n+1}(u+t) \, du \qquad (2)$$

On comprendra que la formule (1) indiquée plus haut est donnée pour faciliter l'explication, et que diverses variantes peuvent y être apportées sans sortir du cadre de l'invention, par exemple :

- l'amplification peut être dépendante de la fréquence. En d'autres termes, la multiplication par un gain $A_i^n$ pourrait être remplacée par une amplification/filtrage par une fonction de transfert $A_i^n(f)$, f désignant la fréquence des sons. La forme des fonctions de transfert utilisées peut être optimisée selon le type d'application du procédé. Une telle amplification dépendant de la fréquence peut par exemple servir à compenser d'éventuelles différences entre les lobes d'émission et les lobes de réception des transducteurs, notamment lorsque des transducteurs différents sont utilisés en émission et en réception.
- il est possible d'interpoler spatialement, de manière connue en soi, les signaux mesurés par les transducteurs de réception ou les signaux d'excitation, pour tenir compte d'un décalage entre le réseau des transducteurs d'émission et le réseau des transducteurs de réception. Un tel décalage peut être dû au fait que les transducteurs d'émission et de réception sont distincts, ou encore à des mouvements du réseau entre la réception et la réémission suivante.

- on peut encore, à l'étape (b), réémettre des ondes de fréquence plus élevée que celles captées à l'étape passive initiale, ce qui permet de localiser plus précisément une source réfléchissante émettant principalement dans les basses fréquences. Dans ce cas, dans une formule telle que (1), et pour n=0 seulement le retournement temporel est effectué sous la forme $S_i^n(T_i^n - \alpha.t)$, $\alpha$ étant un coefficient plus grand que 1 correspondant au rapport de fréquences souhaité. Il convient alors de prévoir que le second réseau de transducteurs d'émission corresponde au premier réseau de transducteurs de réception par une homothétie de rapport $1/\alpha$.

L'émission sonore captée au cours de l'étape passive initiale peut être interne à la source. Ce cas est, par exemple, celui d'une fissure dans une pièce soumise à un contrôle non destructif par émission acoustique, ou d'une fuite sur un gazoduc placé au fond de la mer.

Dans le premier cas, l'émission sonore est liée à des mécanismes tels que le maclage, la rupture ou les microclivages produits par une contrainte mécanique dans des matériaux métalliques ou par des ruptures de fibres dans des matériaux composites.

Dans le second cas, l'émission sonore est liée au bruit de frottement, aux turbulences et à la génération de bulles, au voisinage de la fissure.

L'émission sonore peut également être due à une interaction de la source avec le milieu environnant. C'est par exemple le cas du bruit aérodynamique ou hydrodynamique lorsqu'il existe un mouvement relatif entre la source et le milieu dans lequel elle se trouve.

Lorsqu'il existe dans le milieu environnant un bruit acoustique ambiant non généré par les réseaux de transducteurs, le caractère sonore de la source réfléchissante peut aussi être associé à la modification de ce bruit acoustique ambiant par la source elle-même (réflexion ou absorption ou effet d'écran).

L'invention est applicable que l'émission soit continue ou intermittente.

Si le réseau est mobile par rapport à la source ou au milieu, mais indéformable, on peut avantageusement appliquer aux transducteurs d'émission, au cours de chaque étape d'émission, un signal retourné temporellement obtenu à partir d'une moyenne pondérée des signaux reçus par divers transducteurs de réception voisins, les coefficients de pondération étant déterminés en fonction de l'écartement des transducteurs et de la vitesse de déplacement du réseau.

La bande passante des transducteurs sera choisie en fonction de la nature des sources sonores recherchées et du milieu de propagation.

Pour la détection des sources de bruit dans des solides en contrôle non destructif par émission acoustique, on utilisera en général une plage de fréquences comprise entre une centaine de kHz et une dizaine de MHz, par exemple autour de 500 kHz.

Pour la détection de sources sonores réfléchissantes dans l'air, on utilisera en général une plage de fréquences comprises entre quelques Hz et quelques dizaines de kHz.

Pour la détection des sources réfléchissantes en milieu liquide, par exemple marin, on utilisera en général une plage de fréquence ayant une limite inférieure de quelques Hertz, par exemple 3 Hz, et une limite supérieure de quelques centaines de kHz, par exemple 200 kHz. Des transducteurs ayant une. telle bande passante sont déjà utilisés, notamment pour la détection sismique ou sous-marine.

Une amplification élevée est nécessaire au cours de l'étape (a) ou (e) lorsqu'on cherche à effectuer une détection sur des distances importantes. Cette amplification sera souvent de cent environ à plusieurs centaines. Elle peut conduire alors à utiliser des transducteurs d'émission distincts des transducteurs de réception. Les transducteurs peuvent, avantageusement mais de manière non limitative, être choisis de façon à avoir des lobes d'émission et de réception comparables, les éventuelles différences pouvant être au moins en partie compensées par filtrage comme indiqué ci-dessus.

Les caractéristiques ci-dessus, ainsi que d'autres, apparaîtront mieux à la lecture de la description qui suit de modes particuliers de réalisation, donnés à titre d'exemples non limitatifs. La description se réfère aux dessins qui l'accompagnent, dans lequels :

- la figure 1 est un schéma de principe destiné à faire apparaître les éléments qui interviennent dans la mise en oeuvre de l'invention dans son application au contrôle non destructif de pièces par émission acoustique ;
- la figure 2 est un graphique montrant schématiquement des signaux obtenus en mettant en oeuvre l'invention ;
- la figure 3 est un schéma illustrant un autre domaine d'application de l'invention ; et
- la figure 4 est une représentation schématique d'une variante de réalisation de réseaux de transudcteurs utilisables selon l'invention.

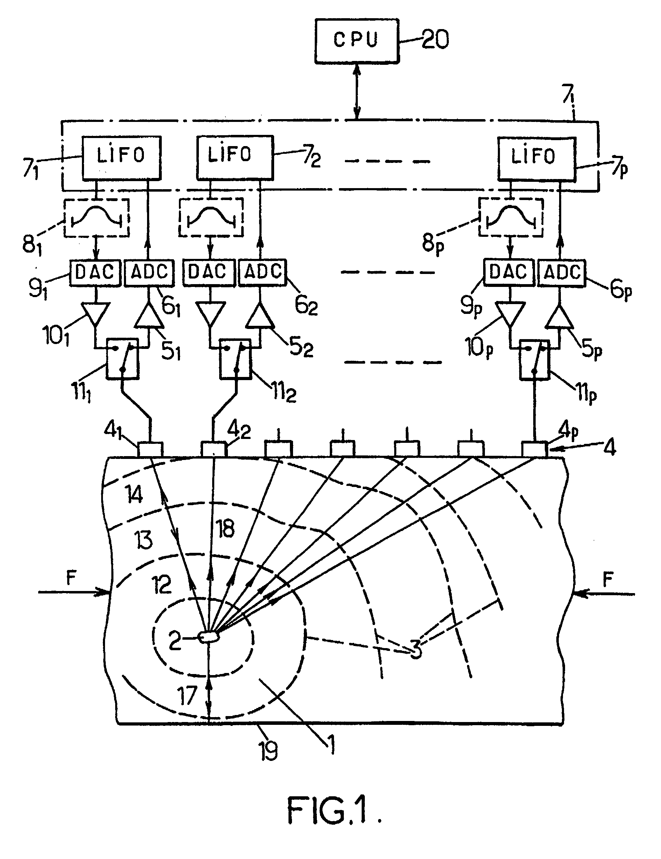

La figure 1 montre, à titre d'exemple, une pièce métallique 1 à tester dans le cadre d'une opération de contrôle non destructif par effet d'émission acoustique. On recherche des défauts structurels dans cette pièce.

Lorsqu'elle est soumise à des contraintes mécaniques, schématisées sur la figure 1 par les flèches F, les zones de la pièce 1 comportant des défauts 2 peuvent émettre des micro-bruits. Ces bruits se propagent selon des surfaces d'ondes 3 dans la pièce et atteignent des transducteurs $4_i$ (i=1,2,...,p) d'un réseau 4 de transducteurs placés sur une face de la pièce 1.

Dans le mode de réalisation considéré ici, les premier, second, troisième, quatrième et cinquième réseaux mentionnés précédemment sont les mêmes, et constitués de transducteurs d'émission-réception $4_i$. Le réseau représenté est unidimensionnel. Bien entendu, ce réseau peut dans le cas général être multidimensionnel, et les transducteurs d'émission peuvent également être différents des transducteurs de réception. Le nombre p des transducteurs résulte d'un compromis entre les performances du dispositif et sa complexité, et dépend de l'application considérée.

Les surfaces d'ondes 3, qui sont sensiblement sphériques au voisinage de la source 2, se déforment au cours de la propagation à cause d'inhomogénéités de caractéristiques de propagation des ondes dans la matière de la pièce 1, par exemple leur célérité.

Les signaux électriques issus des transducteurs $4_i$ pendant un intervalle de temps donné sont, après passage à travers des moyens de protection $11_i$, amplifiés par des amplificateurs $5_i$, numérisés par des convertisseurs analogique-numérique $6_i$, et stockés dans des mémoires respectives $7_i$.

Sur la figure 1, les mémoires $7_i$ sont représentées, à titre d'illustration, comme des mémoires de type dernier entré-premier sorti (last in-first out : LIFO), pour schématiser l'opération de retournement temporel qu'effectue le dispositif. En pratique, ces mémoires $7_i$ peuvent être constituées par des zones d'adressage différentes d'un même plan mémoire 7.

Un processeur de commande 20 supervise le fonctionnement du dispositif, notamment en contrôlant les écritures et lectures dans la mémoire 7.

Les signaux lus dans une mémoire $7_i$ sont convertis en analogique par un convertisseur numérique-analogique $9_i$, puis amplifiés par un amplificateur de puissance $10_i$. Les signaux amplifiés ainsi obtenus sont adressés aux transducteurs $4_i$ à travers les moyens de protection $11_i$. Comme schématisé sur la figure 1, ces moyens $11_i$ sont par exemple constitués de commutateurs électroniques commandés par le processeur 20 pour protéger l'entrée des amplificateurs $5_i$ vis-à-vis de l'énergie produite par les amplificateurs de puissance $10_i$ dans les phases d'émission. Ces moyens de protection 11 pourraient également comprendre des dispositifs limiteurs de tension tels que des diodes ou des éclateurs.

Le fonctionnement du dispositif est commandé par le processeur 20, lequel suit les instructions d'un programme approprié paramétré par l'utilisateur.

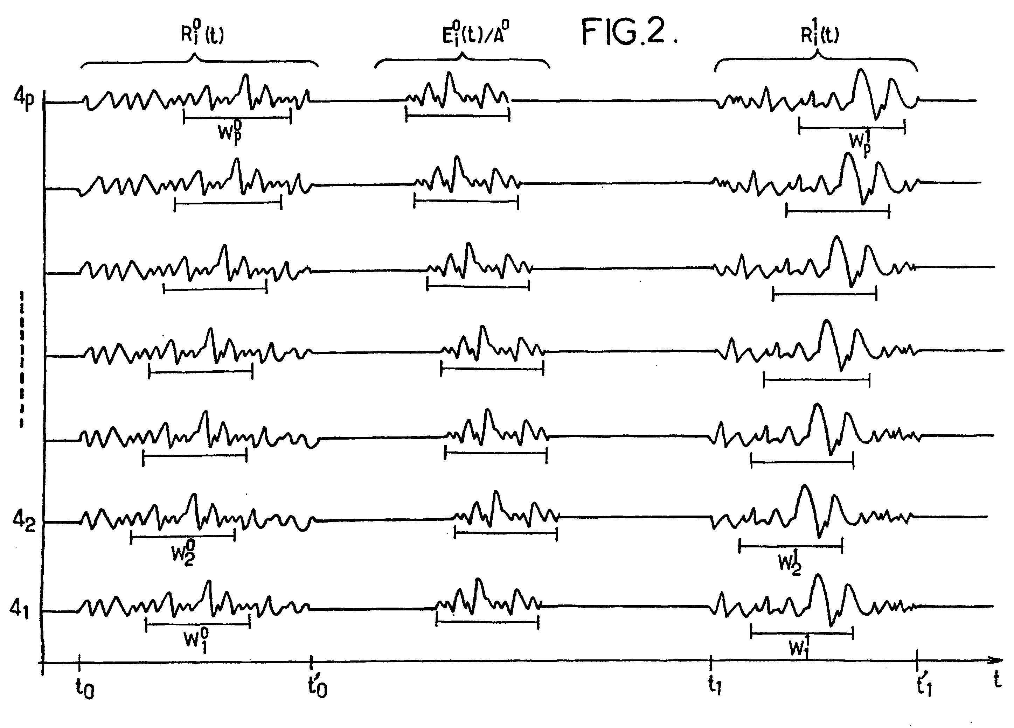

Dans une étape passive initiale, faisant suite à l'application des contraintes F, le processeur 20 commande l'acquisition des signaux électriques délivrés par les transducteurs $4_i$, et la mémorisation dans les mémoires $7_i$ de ces signaux amplifiés et numérisés $R_i^0(t)$. Dans l'exemple illustré sur la figure 2, cette étape d'acquisition des signaux $R_i^0(t)$ correspond à l'intervalle de temps $[t_0, t'_0]$. On note que les intervalles de temps d'acquisition pourraient être différents d'un transducteur à un autre. Dans ces signaux $R_i^0(t)$, la contribution des sources recherchées (défauts 2) peut être faiblement distincte du bruit de fond.

Pour chaque transducteur $4_i$ du réseau 4, le processeur 20 sélectionne une fenêtre temporelle $W_i^0$ en fonction de la position de ce transducteur relativement à la zone explorée.

Le processeur 20 commande alors des lectures dans les mémoires $7_i$ pour produire à l'entrée des convertisseurs $9_i$ des signaux numériques retournés temporellement $S_i^0(T^0-t) = R_i^0(T^0-t) \cdot W_i^0(T^0-t)$. Si les fonctions de fenêtrage utilisées $W_i^0(t)$ ne sont pas rectangulaires, on prévoit des filtres pondérateurs $8_i$ assurant à l'entrée des convertisseurs $9_i$ les multiplications par les coefficients pondérateurs appropriés. Les signaux numériques retournés temporellement correspondent aux signaux $E_i^0(t)/A^0$ représentés sur la figure 2 dans le cas de fonctions de fenêtrage rectangulaires.

Après conversion en analogique, les amplificateurs de puissance $10_i$ appliquent le gain d'amplification $A^0$ pour fournir les signaux d'excitation $E_i^0(t)$ aux transducteurs d'émission $4_i$.

Les transducteurs $4_i$ émettent alors un ensemble de signaux acoustiques qui suivent le trajet inverse 13 de ceux 12 correspondant aux surfaces d'onde 3 et qui convergent donc vers la source éventuelle 2. Comme cette source est acoustiquement réfléchissante, elle renvoie une grande partie de l'énergie incidente. Ces ondes ainsi réfléchies suivent des trajets 14 et sont détectées par les transducteurs $4_i$.

Le fait d'avoir retourné temporellement les signaux $R_i^0(t)$ permet d'assurer, même si le milieu 1 est très inhomogène du point de vue de la propagation, une refocalisation automatique des ondes ré-émises par les transducteurs $4_i$ vers la source de bruit.

En outre, le fait d'utiliser le signal inversé en temps prend automatiquement en compte d'éventuels signaux parasites sur un transducteur donné dus à des réflexions des ondes émises ou réfléchies par la source réfléchissante 2 sur des discontinuités d'impédance acoustique dans le milieu 1 ou à ses limites. Par exemple, la figure 1 montre une telle propagation d'onde selon la direction 17 qui après réflexion sur une surface 19 du milieu 1 se propage vers le transducteur $4_2$ selon la même direction 18 que l'onde directement émise par la source 2 vers ce transducteur.

Après un temps correspondant environ à deux fois le temps de propagation des ondes acoustiques entre le réseau des transducteurs et la zone explorée, on procède à une nouvelle acquisition des signaux $R_i^1(t)$ produits par

les transducteurs de réception $4_i$. Ces signaux incluent les échos acoustiques de l'onde focalisée sur la source 2 par le processus de retournement temporel, et on peut s'attendre à ce que cette contribution de la source 2 ait une plus grande importance relative que dans les signaux $R_i^0(t)$ obtenus lors de l'étape passive initiale.

De la même manière que précédemment, le processeur 20 définit pour chaque transducteur $4_i$ une fenêtre temporelle $W_i^1$ pour l'exploitation des signaux $R_i^1(t)$.

L'exploitation de ces signaux comporte de préférence n itérations du processus de retournement temporel, de réémission et d'acquisition des signaux d'écho. Après n itérations ($n \geq 0$), on note $R_i^{n+1}(t)$ le signal mémorisé relativement au transducteur $4_i$.

L'exploitation des signaux $R_i^n(t)$ peut consister à rechercher la présence éventuelle d'un pic de signal sur plusieurs voies de réception. Il est aussi possible de rechercher des corrélations entre les signaux de différentes voies i et j, à savoir $R_i^n(t)$ et $R_j^n(t)$. On peut également utiliser un procédé tel que décrit dans EP-A-0 591 061 ou US-A-5 428 999.

Un mode de détection préféré après n itérations ($n \geq 1$) consiste à calculer des fonctions d'intercorrélation $C_i^n(t)$ conformément à la formule (2) et à faire la somme de ces fonctions pour les différentes voies i pour obtenir une fonction d'intercorrélation globale $C^n(t)$ dans laquelle on recherche la présence de pics pour détecter une source sonore réfléchissante.

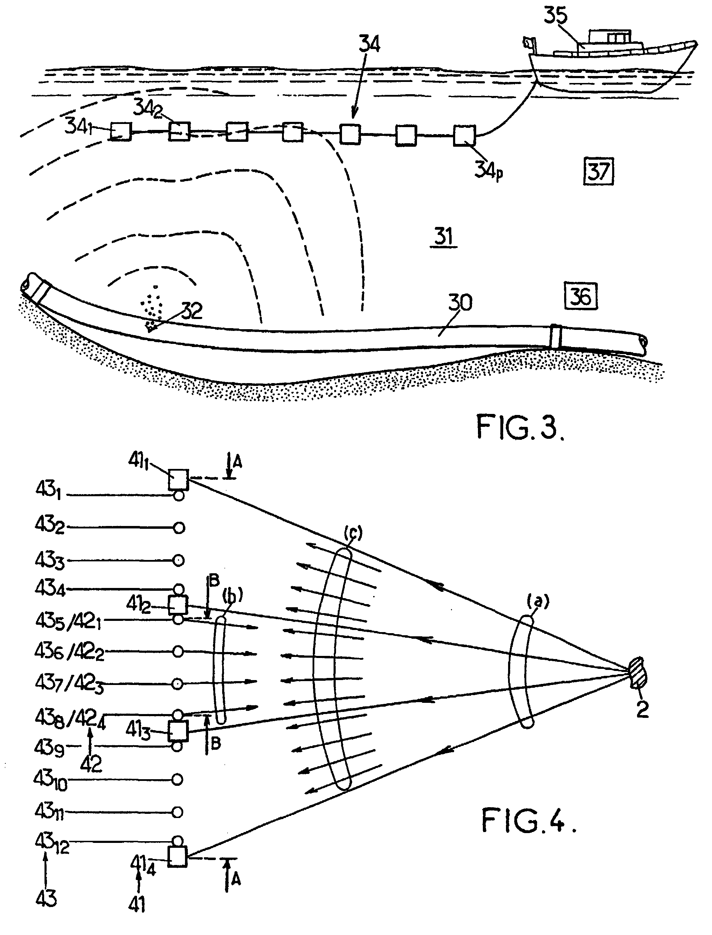

La figure 3 illustre une autre application de l'invention dans laquelle le milieu de propagation 31 est la mer et la source réfléchissante 32 est une fuite de gaz dans un gazoduc 30 situé au fond de l'eau. Dans ce cas, l'émission de bulles constitue la source de bruit et la discontinuité d'impédance acoustique entre l'eau de mer et les bulles et l'eau de mer et le gazoduc constituent la cause de réflexion des ondes. Le réseau 34 des transducteurs $34_i$ est ici immergé. Il peut notamment être tiré par un navire 35.

De la même manière, on pourrait détecter et localiser en milieu marin toute source réfléchissante telle qu'un sous-marin 36 ou une mine sous-marine 37.

L'invention ne se limite nullement à ces modes de réalisation qui ont été décrits ; elle en embrasse au contraire toutes les variantes. Il en est une particulièrement avantageuse lorsqu'on souhaite localiser avec une grande précision une source réfléchissante qui génère des sons de fréquence relativement basse, ce qui normalement se traduirait par une faible précision sur la localisation. Afin d'améliorer considérablement cette précision dans la localisation de la source réfléchissante, on utilise des fréquences plus élevées lors des phases d'émission/réception que celles captées à l'étape passive initiale. A cette fin, les transducteurs de réception du premier réseau fonctionnent à basse fréquence, et ceux des second, troisième, quatrième et cinquième réseaux de transducteurs (émission-réception) fonctionnent à plus haute fréquence. Sur la figure 4 on voit un tel ensemble.

Lors de la première écoute, les p transducteurs de réception $41_i$ du premier réseau 41 sont distribués sur une zone de dimension latérale A. Les signaux initialement reçus par ces transducteurs sont traités comme décrit précédemment à l'étape (a), avec en plus une opération de compression temporelle. Ainsi, le signal d'excitation réémis lors de la première réémission (étape (b)) devient :

$$E_i^0(t) = A_i^0 \cdot S_i^0(T_i^0 - \alpha t)$$

où $\alpha$ est un facteur supérieur à 1 définissant le rapport entre les fréquences d'émission et celles contenues dans la réception initiale.

Ces signaux sont émis par des transducteurs $42_j$ distribués aux noeuds du second réseau 42 qui est plus serré que le premier réseau 41, et de dimension latérale B<A. Il est avantageux d'utiliser un second réseau 42 correspondant au premier réseau 41 par une homothétie de rapport $1/\alpha$. Les réseaux 41 et 42 comprennent le même nombre p de transducteurs (dans l'exemple simplifié de la figure 4, p=4 et $\alpha \approx 4$). Les signaux initialement reçus par chaque transducteur $41_i$ (flèches (a) sur la figure 4) sont adressés aux transducteurs correspondants $42_j$ avec j = i pour la première réémission (flèches (b)). Ainsi le signal reçu en i = 1 est réémis en j = 1 etc...

Dans la réalisation préférée illustrée par la figure 4, le troisième réseau 43 est distinct des deux premiers 41, 42, et se compose de transducteurs d'émission-réception $43_k$ pour k=1,2,...,q (il est confondu avec les "quatrième" et "cinquième" réseaux). Les flèches (c) désignent les signaux d'écho acoustique reçus par les transducteurs $43_k$ à l'étape (c).

Le réseau 43 a des dimensions plus grandes que celles du second réseau 42 (typiquement de l'ordre de A), et comporte davantage de transducteurs : q>p. Une telle disposition permet d'améliorer fortement la précision de la localisation.

Dans l'exemple représenté sur la figure 4, q=12 pour p=4, et les transducteurs $43_5$ à $43_8$ sont, respectivement, les transducteurs $42_1$ à $42_4$ du réseau 42. Comme le second réseau 42 est destiné à fonctionner à haute fréquence, il est en effet judicieux de prévoir qu'il se compose de transducteurs d'émission-réception faisant par ailleurs partie du troisième réseau 43. D'autre part, si on emploie des transducteurs à large bande, il est possible de prévoir que les

transducteurs $41_i$ du premier réseau 41 fassent également partie du troisième réseau 43.

**Revendications**

1. Procédé de détection et/ou de localisation d'une source sonore (2;32), comprenant une étape initiale passive dans laquelle on capte des signaux acoustiques reçus par des transducteurs de réception ($4_i$;$34_i$;$41_i$) situés aux noeuds d'un premier réseau (4;34;41) et on mémorise des signaux électriques produits par les transducteurs de réception du premier réseau en réponse auxdits signaux acoustiques, **caractérisé en ce qu'**il comprend ensuite les étapes suivantes :

   (a) on retourne temporellement et on amplifie au moins une fenêtre temporelle ($W_i^0$) de chaque signal électrique ($R_i^0$(t)) mémorisé à l'étape initiale passive pour produire des signaux d'excitation ($E_i^0$(t)) ;
   (b) on applique les signaux d'excitation à des transducteurs d'émission respectifs ($4_i$;$34_i$;$42_j$) situés aux noeuds d'un second réseau (4;34;42) correspondant spatialement au premier réseau (4;34;41) ;
   (c) on capte des signaux d'écho acoustique reçus par des transducteurs de réception ($4_i$;$34_i$;$43_k$) situés aux noeuds d'un troisième réseau (4;34;43) et on mémorise des signaux électriques produits par les transducteurs de réception du troisième réseau en réponse auxdits signaux d'écho acoustique ; et
   (d) on utilise les signaux électriques ($R_i^1$(t)) mémorisés à l'étape (c) pour détecter la présence éventuelle d'une source sonore réfléchissante.

2. Procédé selon la revendication 1, **caractérisé en ce que** l'étape (d) d'utilisation des signaux électriques mémorisés à l'étape (c) comprend au moins une itération d'un processus comportant les étapes suivantes :

   (e) on retourne temporellement et on amplifie au moins une fenêtre temporelle ($W_i^n$) de chacun des signaux électriques qui viennent d'être mémorisés pour produire des signaux d'excitation ($E_i^n$(t)) ;
   (f) on applique les signaux d'excitation produits à l'étape (e) à des transducteurs d'émission ($4_i$;$34_i$;$43_k$) situés aux noeuds d'un quatrième réseau (4;34;43) correspondant spatialement au troisième réseau ; et
   (g) on capte des signaux d'écho acoustique reçus par des transducteurs de réception situés aux noeuds d'un cinquième réseau (4;34;43) et on mémorise des signaux électriques ($R_i^{n+1}$(t)) produits par les transducteurs de réception du cinquième réseau en réponse à ces signaux d'écho acoustique.

3. Procédé selon la revendication 2, **caractérisé en ce que** les troisième, quatrième et cinquième réseaux (4;34;43) sont confondus et comprennent des transducteurs d'émission-réception ($4_i$;$34_i$;$43_k$).

4. Procédé selon la revendication 2 ou 3, **caractérisé en ce que** les troisième et cinquième réseaux sont confondus, et **en ce que**, ayant effectué un nombre n, au moins égal à 1, d'itérations dudit processus, on évalue, pour certains au moins des transducteurs de réception du troisième réseau (4;34;43), une fonction d'intercorrélation individuelle ($C_i^n$(t)) entre les signaux électriques mémorisés relativement à un transducteur de réception du troisième réseau immédiatement avant la n-ième itération et à l'étape (g) de la n-ième itération, et on détecte la présence éventuelle d'une source sonore réfléchissante sur la base des fonctions d'intercorrélation individuelles évaluées.

5. Procédé selon la revendication 4, **caractérisé en ce qu'**on calcule une somme des fonctions d'intercorrélation individuelles ($C_i^n$(t)) relatives à certains au moins transducteurs de réception du troisième réseau (4;34;43) pour obtenir une fonction d'intercorrélation globale ($C^n$(t)), et on recherche la présence d'un pic dans la fonction d'intercorrélation globale pour détecter la présence éventuelle d'une source sonore réfléchissante.

6. Procédé selon l'une quelconque des revendications 1 à 5, **caractérisé en ce que** les premier et second réseaux (4:34) sont confondus et comprennent des transducteurs d'émission-réception ($4_i$;$34_i$).

7. Procédé selon les revendications 3 et 6, **caractérisé en ce que** les premier, second, troisième, quatrième et cinquième réseaux (4;34) sont confondus.

8. Prodédé selon l'une quelconque des revendications 1 à 5, **caractérisé en ce que** les signaux d'excitation ($E_i^0$(t)) sont obtenus à l'étape (a) par une opération de retournement temporel dans laquelle les fréquences contenues dans les signaux ($R_i^0$(t)) mémorisés à l'étape passive initiale sont multipliées par un coefficient $\alpha$ plus grand que 1, et **en ce que** le second réseau (42) de transducteurs d'émission correspond au premier réseau (41) de transducteurs de réception par une homothétie de rapport $1/\alpha$.

9. Procédé selon la revendication 8, **caractérisé en ce que** le second réseau (42) se compose de transducteurs d'émission-réception ($42_j$) faisant également partie du troisième réseau (43).

10. Procédé selon la revendication 8 ou 9, **caractérisé en ce que** le troisième réseau (43) a des dimensions sensiblement plus grandes que le second réseau (42) et comporte davantage de transducteurs ($43_k$).

11. Dispositif de détection et/ou de localisation d'une source sonore (2;32), comprenant un premier réseau (4;34;41) de transducteurs de réception ($4_i;34_i;41_i$) pour capter des signaux acoustiques lors d'une étape initiale passive, et des moyens de stockage (7) pour mémoriser des signaux électriques produits par les transducteurs de réception du premier réseau en réponse auxdits signaux acoustiques, **caractérisé en ce qu'**il comprend en outre :

   - des moyens de traitement (20, $8_i$, $10_i$) pour retourner temporellement et amplifier au moins une fenêtre temporelle ($W_i^0$) de chaque signal électrique ($R_i^0(t)$) mémorisé dans les moyens de stockage (7) à l'étape initiale passive afin de produire des signaux d'excitation ($E_i^0(t)$) ;
   - un second réseau (4;34;42) de transducteurs d'émission ($4_i;34_i;42_j$), correspondant spatialement au premier réseau (4;34;41), auxquels sont respectivement appliqués lesdits signaux d'excitation ; et
   - un troisième réseau (4;34;43) de transducteurs de réception ($4_i;34_i;43_k$) pour capter des signaux d'écho acoustique reçus en réponse aux ondes émises par les transducteurs d'émission du second réseau,

   les moyens de stockage mémorisant des signaux électriques produits par les transducteurs de réception du troisième réseau en réponse auxdits signaux d'écho acoustique, et les moyens de traitement (20) étant agencés pour utiliser les signaux électriques ($R_i^1(t)$) mémorisés pour détecter la présence éventuelle d'une source sonore réfléchissante.

12. Dispositif selon la revendication 11, **caractérisé en ce que** les moyens de traitement (20) sont agencés pour utiliser lesdits signaux électriques mémorisés en exécutant au moins une itération d'un processus comportant les étapes suivantes :

   (e) retourner temporellement et amplifier au moins une fenêtre temporelle ($W_i^n$) de chacun des signaux électriques qui viennent d'être mémorisés pour produire des signaux d'excitation ($E_i^n(t)$) ;
   (f) appliquer les signaux d'excitation produits à l'étape (e) à des transducteurs d'émission ($4_i;34_i;43_k$) situés aux noeuds d'un quatrième réseau (4;34;43) correspondant spatialement au troisième réseau ; et
   (g) capter des signaux d'écho acoustique reçus par des transducteurs de réception situés aux noeuds d'un cinquième réseau (4;34;43) et mémoriser des signaux électriques ($R_i^{n+1}(t)$) produits par les transducteurs de réception du cinquième réseau en réponse à ces signaux d'écho acoustique.

13. Dispositif selon la revendication 11 ou 12, **caractérisé en ce que** les moyens de traitement (20) sont agencés pour produire le premier ensemble de signaux d'excitation ($E_i^0(t)$) par une opération de retournement temporel dans laquelle les fréquences contenues dans les signaux ($R_i^0(t)$) mémorisés à l'étape passive initiale sont multipliées par un coefficient $\alpha$ plus grand que 1, et **en ce que** le second réseau (42) de transducteurs d'émission correspond au premier réseau (41) de transducteurs de réception par une homothétie de rapport $1/\alpha$.

**Patentansprüche**

1. Verfahren zum Erkennen und/oder Lokalisieren einer Schallquelle (2;32), das einen passiven Anfangsschritt umfasst, in dem akustische Signale aufgefangen werden, die von Empfangs-Messwandlern ($4_i;34_i;41_i$) empfangen werden, die sich an den Knoten eines ersten Netzes (4;34;41) befinden, und elektrische Signale gespeichert werden, die von den Empfangs-Messwandlern des ersten Netzes als Antwort auf die akustischen Signale erzeugt wurden, **dadurch gekennzeichnet, dass** es anschließend folgende Schritte umfasst:

   (a) man kehrt mindestens ein Zeitfenster ($W_i^0$) jedes im passiven Anfangsschritt gespeicherten elektrischen Signals ($R_i^0(t)$) vorübergehend um und verstärkt es, um Anregungssignale ($E_i^0(t)$) zu erzeugen;
   (b) man legt die Anregungssignale an entsprechende Sende-Messwandler ($4_i;34_i;42_j$) an, die sich an den Knoten eines zweiten Netzes (4;34;42) befinden, das räumlich dem ersten Netz (4;34;41) entspricht;
   (c) man fängt Echosignale auf, die von Empfangs-Messwandlern ($4_i;34_i;43_k$) empfangen wurden, die sich an den Knoten eines dritten Netzes (4;34;43) befinden, und speichert elektrische Signale, die von den Empfangs-Messwandlern des dritten Netzes als Antwort auf die genannten Echosignale erzeugt wurden; und

(d) man verwendet die in Schritt (c) gespeicherten elektrischen Signale ($R_i^1(t)$), um das mögliche Vorhandensein einer reflektierenden Schallquelle festzustellen.

2. Verfahren nach Anspruch 1, **dadurch gekennzeichnet, dass** Schritt (d) der Verwendung der in Schritt (c) gespeicherten Signale mindestens eine Wiederholung eines Prozesses einschließt, der folgende Schritte umfasst:

(e) man kehrt mindestens ein Zeitfenster ($W_i^n$) jedes der soeben gespeicherten elektrischen Signale vorübergehend um und verstärkt es, um Anregungssignale ($E_i^n(t)$) zu erzeugen;
(f) man legt die in Schritt (e) erzeugten Anregungssignale an Sende-Messwandler ($4_i; 34_i; 43_k$) an, die sich an den Knoten eines vierten Netzes (4;34;43) befinden, das räumlich dem dritten Netz entspricht; und
(g) man fängt Echosignale auf, die von Empfangs-Messwandlern empfangen wurden, die sich an den Knoten eines fünften Netzes (4;34;43) befinden und speichert elektrische Signale ($R_i^{n+1}(t)$), die von den Empfangs-Messwandlern des fünften Netzes als Antwort auf diese Echosignale erzeugt wurden.

3. Verfahren nach Anspruch 2, **dadurch gekennzeichnet, dass** das dritte, vierte und fünfte Netz (4;34;43) zusammengefasst sind und Sende-Empfangs-Messwandler ($4_i; 34_i; 43_k$) umfassen.

4. Verfahren nach Anspruch 2 oder 3, **dadurch gekennzeichnet, dass** das dritte und fünfte Netz zusammengefasst sind, sowie dadurch, dass man nach einer Anzahl n Wiederholungen des Prozesses, die mindestens gleich 1 ist, zumindest für bestimmte der Empfangs-Messwandler des dritten Netzes (4;34;43) eine individuelle Interkorrelationsfunktion ($C_i^n(t)$) zwischen den elektrischen Signalen ermittelt, die in Bezug auf einen Empfangs-Messwandler des dritten Netzes unmittelbar vor der n-ten Wiederholung und im Schritt (g) der n-ten Wiederholung gespeichert wurden, und man das mögliche Vorhandensein einer reflektierenden Schallquelle auf der Basis der ermittelten individuellen Interkorrelationsfunktionen feststellt.

5. Verfahren nach Anspruch 4, **dadurch gekennzeichnet, dass** man eine Summe der individuellen Interkorrelationsfunktionen ($C_i^n(t)$) berechnet, die sich auf zumindest bestimmte der Empfangs-Messwandler des dritten Netzes (4;34;43) beziehen, um eine Gesamt-Interkorrelationsfunktion ($C^n(t)$) zu erhalten, und in der Gesamt-Interkorrelationsfunktion nach dem Vorhandensein eines Peaks sucht, um das mögliche Vorhandensein einer reflektierenden Schallquelle festzustellen.

6. Verfahren nach einem der Ansprüche 1 bis 5, **dadurch gekennzeichnet, dass** das erste und zweite Netz (4;34;) zusammengefasst sind und Sende-Empfangs-Messwandler ($4_i; 34_i$) umfassen.

7. Verfahren nach den Ansprüchen 3 und 6, **dadurch gekennzeichnet, dass** das erste, zweite, dritte, vierte und fünfte Netz (4;34) zusammengefasst sind.

8. Verfahren nach einem der Ansprüche 1 bis 5, **dadurch gekennzeichnet, dass** die Anregungssignale ($E_i^0(t)$) in Schritt (a) durch temporäres Umkehren erhalten werden, bei dem die Frequenzen, die in den im passiven Anfangsschritt gespeicherten Signalen ($R_i^0(t)$) enthalten sind, mit einem Koeffizienten $\alpha$ multipliziert werden, der größer als 1 ist, sowie dadurch, dass das zweite Netz (42) von Sende-Messwandlem dem ersten Netz (41) von Empfangs-Messwandlern mit einer Homothetie mit einem Verhältnis von $1/\alpha$ entspricht.

9. Verfahren nach Anspruch 8, **dadurch gekennzeichnet, dass** das zweite Netz (42) aus Sende-Empfangs-Messwandlern ($42_j$) besteht, die auch zum dritten Netz (43) gehören.

10. Verfahren nach Anspruch 8 oder 9, **dadurch gekennzeichnet, dass** das dritte Netz (43) wesentlich größer ist als das zweite Netz (42) und mehr Messwandler ($43_k$) umfasst.

11. Vorrichtung zum Erkennen und/oder Lokalisieren einer Schallquelle (2;32), die ein erstes Netz (4;34;41) mit Empfangs-Messwandlern ($4_i; 34_i; 41_i$) zum Auffangen akustischer Signale während eines passiven Anfangsschritts umfasst, sowie Speichervorrichtungen (7) zum Speichern elektrischer Signale, die von den Empfangs-Messwandlern des ersten Netzes als Antwort auf die akustischen Signale erzeugt werden, **dadurch gekennzeichnet, dass** sie ferner umfasst:

- Verarbeitungsvorrichtungen ($20, 8_i, 10_i$) zum vorübergehenden Umkehren und Verstärken mindestens eines Zeitfensters ($W_i^0$) jedes elektrischen Signals ($R_i^0(t)$), das in den Speichervorrichtungen (7) im passiven Anfangsschritt zum Erzeugen von Anregungssignalen ($E_i^0(t)$) gespeichert wurde;

- ein zweites Netz (4;34;42) mit Sende-Messwandlern ($4_i;34_i;42_j$), das räumlich dem ersten Netz (4;34;41) entspricht, an welche die genannten Anregungssignale angelegt werden; und
- ein drittes Netz (4;34;43) mit Empfangs-Messwandlern ($4_i;34_j;43_k$) zum Auffangen von Echosignalen als Antwort auf die von den Sende-Messwandlern des zweiten Netzes ausgestrahlten Wellen,

wobei die Speichervorrichtungen, die elektrische Signale speichern, die von den Empfangs-Messwandlern des dritten Netzes als Antwort auf die genannten Echosignale erzeugt wurden, und die Verarbeitungsvorrichtungen (20) so vorgesehen sind, dass sie die elektrischen Signale ($R_i^1(t)$) verwenden, die zum Erkennen des möglichen Vorhandenseins einer reflektierenden Schallquelle gespeichert wurden.

12. Vorrichtung nach Anspruch 11, **dadurch gekennzeichnet, dass** die Verarbeitungsvorrichtungen (20) so vorgesehen sind, dass sie die gespeicherten elektrischen Signale verwenden und dabei mindestens eine Wiederholung eines Prozesses ausführen, der folgende Schritte umfasst:

(e) das vorübergehende Umkehren und Verstärken mindestens eines Zeitfensters ($W_i^n$) jedes der soeben gespeicherten elektrischen Signale zum Erzeugen von Anregungssignalen ($E_i^n(t)$);
(f) das Anlegen der in Schritt (e) erzeugten Anregungssignale an Sende-Messwandler ($4_i;34_i;43_k$), die sich an den Knoten eines vierten Netzes (4;34;43) befinden, das räumlich dem dritten Netz entspricht; und
(g) das Auffangen von Echosignalen, die von Empfangs-Messwandlern empfangen wurden, die sich an den Knoten eines fünften Netzes (4;34;43) befinden, und das Speichern elektrischer Signale ($R_i^{n+1}(t)$), die von den Empfangs-Messwandlern des fünften Netzes als Antwort auf diese Echosignale erzeugt wurden.

13. Vorrichtung nach Anspruch 11 oder 12, **dadurch gekennzeichnet, dass** die Verarbeitungsvorrichtungen (20) so vorgesehen sind, dass sie die erste Gruppe von Anregungssignalen ($E_i^0(t)$) durch ein temporäres Umkehren erzeugen, bei dem die Frequenzen, die in den im passiven Anfangsschritt gespeicherten Signalen ($R_i^0(t)$) enthalten sind, mit einem Koeffizienten $\alpha$ multipliziert werden, der größer als 1 ist, sowie dadurch, dass das zweite Netz (42) von Sende-Messwandlern dem ersten Netz (41) von Empfangs-Messwandlern mit einer Homothetie mit einem Verhältnis von $1/\alpha$ entspricht.

## Claims

1. Method of detecting and/or locating a sound source (2; 32), comprising a passive initial step in which acoustic signals received by reception transducers ($4_i; 34_i; 41_i$) located at the nodes of a first array (4; 34; 41) are acquired, and electric signals produced by the reception transducers of the first array in response to the said acoustic signals are stored, **characterized in that** it then comprises the following steps:

(a) at least one time window ($W_i^0$) of each electric signal ($R_i^0(t)$) stored in the passive initial step is time reversed and amplified in order to produce excitation signals ($E_i^0(t)$);
(b) the excitation signals are applied to respective emission transducers ($4_i; 34_i; 42_j$) located at the nodes of a second array (4; 34; 42) spatially corresponding to the first array (4; 34; 41);
(c) acoustic echo signals received by the reception transducers ($4_i; 34_i; 43_k$) located at the nodes of a third array (4; 34; 43) are acquired, and electric signals produced by the reception transducers of the third array in response to the said acoustic echo signals are stored; and
(d) the electric signals ($R_i^1(t)$) stored in step (c) are used to detect the possible presence of a reflecting sound source.

2. Method according to Claim 1, **characterized in that** step (d) of using the electric signals stored in step (c) comprises at least one iteration of a process including the following steps:

(e) at least one time window ($W_i^n$) of each of the electric signals which have just been stored are time reversed and amplified in order to produce excitation signals ($E_i^n(t)$);
(f) the excitation signals produced in step (e) are applied to emission transducers ($4_i; 34_i; 43_k$) located at the nodes of a fourth array (4; 34; 43) spatially corresponding to the third array; and
(g) acoustic echo signals received by reception transducers located at the nodes of a fifth array (4; 34; 43) are acquired, and electric signals ($R_i^{n+1}(t)$) produced by the reception transducers of the fifth array in response to these acoustic echo signals are stored.

3. Method according to Claim 2, **characterized in that** the third, fourth and fifth arrays (4; 34; 43) are merged and comprise emission/reception transducers ($4_i$; $34_i$; $43_k$).

4. Method according to Claim 2 or 3, **characterized in that** the third and fifth arrays are merged, and **in that**, having performed a number n, at least equal to 1, of iterations of the said process, an individual cross-correlation function ($C_i^n(t)$) is evaluated, for at least some of the reception transducers of the third array (4; 34; 43), between the electric signals stored relative to a reception transducer of the third array immediately before the n-th iteration and in step (g) of the n-th iteration, and the possible presence of a reflecting sound source is detected on the basis of the evaluated individual cross-correlation functions.

5. Method according to Claim 4, **characterized in that** a sum of the individual cross-correlation functions ($C_i^n(t)$) relating to at least some reception transducers of the third array (4; 34; 43) is calculated in order to obtain an overall cross-correlation function ($C^n(t)$), and a search is made for the presence of a peak in the overall cross-correlation function in order to detect the possible presence of a reflecting sound source.

6. Method according to any one of Claims 1 to 5, **characterized in that** the first and second arrays (4; 34) are merged and comprise emission/reception transducers ($4_i$; $34_i$).

7. Method according to Claims 3 and 6, **characterized in that** the first, second, third, fourth and fifth arrays (4; 34) are merged.

8. Method according to any one of Claims 1 to 5, **characterized in that** the excitation signals ($E_i^0(t)$) are obtained in step (a) by a time reversal operation in which the frequencies contained in the signals ($R_i^0(t)$) stored in the initial passive step are multiplied by a coefficient $\alpha$ greater than 1, and **in that** the second array (42) of emission transducers corresponds to the first array (41) of reception transducers through a homothetic transformation of ratio $1/\alpha$.

9. Method according to Claim 8, **characterized in that** the second array (42) is composed of emission/reception transducers ($42_j$) also forming part of the third array (43).

10. Method according to Claim 8 or 9, **characterized . in that** the third array (43) has substantially larger dimensions than the second array (42) and includes more transducers ($43_k$).

11. Device for detecting and/or locating a sound source (2; 32), comprising a first array (4; 34; 41) of reception transducers ($4_i$; $34_i$; $41_i$) for acquiring acoustic signals during a passive initial step, and storage means (7) for storing electric signals produced by the reception transducers of the first array in response to the said acoustic signals, **characterized in that** it furthermore comprises:

    - processing means (20, $8_i$, $10_i$) for time reversing and amplifying at least one time window ($W_i^0$) of each electric signal ($R_i^0(t)$) stored in the storage means (7) in the passive initial step in order to produce excitation signals ($E_i^0(t)$);
    - a second array (4; 34; 42) of emission transducers ($4_i$; $34_i$; $42_j$), spatially corresponding to the first array (4; 34; 41), to which the said excitation signals are respectively applied; and
    - a third array (4; 34; 43) of reception transducers ($4_i$; $34_i$; $43_k$) for acquiring acoustic echo signals received in response to the waves emitted by the emission transducers of the second array,

    the storage means storing electric signals produced by the reception transducers of the third array in response to the said acoustic echo signals, and the processing means (20) being designed to use the stored electric signals ($R_i^1(t)$) in order to detect the possible presence of a reflecting sound source.

12. Device according to Claim 11, **characterized in that** the processing means (20) are designed to use the said stored electric signals by carrying out at least one iteration of a process including the following steps:

    (e) time reversing and amplifying at least one time window ($W_i^n$) of each of the electric signals which have just been stored in order to produce excitation signals ($E_i^n(t)$);
    (f) applying the excitation signals produced in step (e) to emission transducers ($4_i$; $34_i$; $43_k$) located at the nodes of a fourth array (4; 34; 43) spatially corresponding to the third array; and
    (g) acquiring acoustic echo signals received by reception transducers located at the nodes of a fifth array (4; 34; 43), and storing electric signals ($R_i^{n+1}(t)$) produced by the reception transducers of the fifth array in response to these acoustic echo signals.

13. Device according to Claim 11 or 12, **characterized in that** the processing means (20) are designed to produce the first set of excitation signals ($E_i^0(t)$) by a time reversal operation in which the frequencies contained in the signals ($R_i^0(t)$) stored in the initial passive step are multiplied by a coefficient $\alpha$ greater than 1, and **in that** the second array (42) of emission transducers corresponds to the first array (41) of reception transducers through a homothetic transformation of ratio $1/\alpha$.

FIG.1.

FIG.2.

FIG.3.

FIG.4.